# EUROPEAN PATENT APPLICATION

(11) **EP 4 797 030 A1**
(43) Date of publication of application: **26.08.2026**
(21) Application number: 25159160.8
(22) Date of filing: 20.02.2025
(51) Int. Cl.: G05D 1/622, G05D 1/82, G05D 109/30

(54) **COMPENSATING IMPRECISE USER INPUT IN THE MANEUVERING OF A VESSEL**

(71) Applicant: ABB Schweiz AG, 5400 Baden (CH)
(72) Inventor: TERVO, Kalevi, 00980 Helsinki (FI); LINDER, Jonas, 464 93 Mellerud (SE)
(74) Representative: Kransell & Wennborg KB

(57) **Abstract**

The invention is concerned with a method, command adjustment device, computer program and computer program product for compensating imprecise user input in the maneuvering of a vessel as well as a vessel control system and a vessel comprising a command adjusting device. The device detects the environment of the vessel (22), determines at least one distance (d1, d2) to an object (38) in the environment of the vessel (22) as the vessel is operated using at least one control command originating from an operator of the vessel, where each distance is related to a corresponding point (P1, P2) on the vessel (22), analyses the at least one distance, determines, based on the analysis, at least one compensation (SC, VOC) for the at least one control command, and provides the at least one control command compensation for use in the operation of the vessel (22) being performed by the operator.

## Description

### TECHNICAL FIELD

The invention relates to a method, command adjustment device, computer program and computer program product for compensating imprecise user input in the maneuvering of a vessel, as well as a vessel control system comprising the command adjustment device and a vessel comprising the vessel control system.

### BACKGROUND

There is a lot of development around vessel automation and autonomy ongoing globally in the marine industry.

Systems and solutions have been proposed for collision avoidance in automatic operation, automatic docking, etc. Most of the solutions presented are either fully automatic until human takes over or fully manual.

However, it is expected that most vessels will have low level of maneuvering automation in the foreseeable future. There are situational awareness systems as well as Electronic Chart Display Systems (ECDIS) which the operator can use to support in understanding how to approach a quay and what is the overall situation.

Many vessel owners also limit the use of Dynamic Positioning (DP) systems in approach and maneuvering at the port. They would rather have a system where the crew can be kept in control all the time.

Thus it is often desirable that the operator is in charge of control of the vessel. Moreover, the automation solutions which assist the operator should be implemented so that they enable the operator to maintain control.

Thus, a vessel may be operated manually using user interface devices, such as steering wheels, levers, buttons or joysticks and in such operation it may additionally be necessary for the operator to use the user interface device with precision in order to make the correct move that does not cause a collision.

It would be of interest to allow the operator to be less precise without having to switch to autonomous control or DP mode of operation in order to provide safety in relation to objects provided above, in or below the water.

### SUMMARY

One object of the invention is therefore to increase the safety of an operator controlled vessel.

This object is according to a first aspect achieved through a method for compensating imprecise user input in the maneuvering of a vessel, the method being performed by a command adjustment device and comprising:
detecting the environment of the vessel,
determining at least one distance of the vessel to an object in the environment of the vessel as the vessel is operated using at least one control command originating from an operator of the vessel, where each distance is related to a corresponding point on the vessel,
analysing the at least one distance with regard to avoiding collision with the object,
determining, based on the analysis of the at least one distance, at least one compensation for the at least one control command, and
providing the at least one control command compensation for use in the operation of the vessel being performed by the operator.

The object is according to a second aspect achieved through a command adjustment device for compensating imprecise user input in the maneuvering of a vessel, the command adjustment device comprising a processor operative to:
detect the environment of the vessel,
determine at least one distance of the vessel to an object in the environment of the vessel as the vessel is operated using at least one control command originating from an operator of the vessel, where each distance is related to a corresponding point on the vessel,
analyse the at least one distance,
determine, based on the analysis of the at least one distance, at least one compensation for the at least one control command, and
provide the at least one control command compensation for use in the operation of the vessel being performed by the operator.

The object is according to a third aspect achieved through a vessel control system comprising a user interface device, a sensor unit, a vessel control device and a command adjusting device according to the second aspect.

The object is according to a fourth aspect achieved through a vessel comprising the vessel control system according to the third aspect.

The object is according to a fifth aspect achieved through a computer program for compensating imprecise user input in the maneuvering of a vessel, the computer program comprising computer program code which when run by a processor of a command adjusting device causes the processor to:
detect the environment of the vessel,
determine at least one distance of the vessel to an object in the environment of the vessel as the vessel is operated using at least one control command originating from an operator of the vessel, where each distance is related to a corresponding point on the vessel,
analyse the at least one distance,
determine, based on the analysis of the at least one distance, at least one compensation for the at least one control command, and
provide the at least one control command compensation for use in the operation of the vessel being performed by the operator.

The object is according to a sixth aspect achieved through a computer program product for compensating imprecise user input in the maneuvering of a vessel, the computer program product comprising a data carrier with the computer program code according to the fifth aspect.

According to a first variation of the first aspect, the method further comprises determining at least one speed of the vessel towards the object as the vessel is operated using the at least one control command and analysing the at least one speed, wherein the determining of the at least one control command compensation is made based also on the analysis of the at least one speed.

According to a corresponding variation of the second aspect, the command adjustment device is further operative to determine at least one speed of the vessel towards the object as the vessel is operated using the at least one control command and analyse the at least one speed, wherein the determining of the at least one control command compensation is made based also on the analysis of the at least one speed.

The at least one control command compensation may comprise a command compensation for reducing the speed of the vessel.

The reduction of the speed may additionally be a reduction where the speed decreases with decreasing distance to the object, so that the closer that the vessel is to the object, the lower the speed is. Therefore, the analysing may comprise analysing a relationship between the at least one distance, the at least one speed and time.

The decreasing of the speed with decreasing distance may additionally be made while considering a minimum constant time of encounter to the object.

The at least one control command compensation may be a command compensation for reducing the speed of the vessel in the direction towards the object if there is deemed to be a risk for collision. There may be deemed to be a risk for collision if the vessel speed is above a vessel speed threshold, which vessel speed threshold may be adaptive.

The adaptation may be based on user settings or by using current capabilities of the vessel to slow down motion. These capabilities might depend on which propulsion devices that are active and/or how many generators that are currently running. Alternatively, the vessel speed threshold may be adapted to suit a comfort level of passengers of the vessel.

Furthermore, a control command causing a speed or force in a direction contributing to the moving towards the object may be compensated by a control command compensation causing a speed or force in the opposite direction.

The control command compensation with opposite direction may additionally be applied so that it increases gradually.

The determining of at least one distance may comprise determining a first distance to the object at a first point on the vessel and determining a second distance to the object at a second point on the vessel.

In this case, the determining of at least one speed may comprise determining the speed towards the object at each of the points.

The at least one control command compensation may additionally comprise at least one vessel orientation compensation.

In this case in a further variation of the first aspect, the method may further comprise estimating the desired vessel orientation based on a vessel shape, an actual vessel orientation and a shape of the object.

In this case, in a corresponding variation of the second aspect, the command adjustment device may be further operative to estimate the desired vessel orientation based on a vessel shape, an actual vessel orientation and a shape of the object.

It is additionally possible that the determining of at least one vessel orientation compensation comprises determining a vessel orientation compensation that counters the part of the higher of the speeds that exceeds the other speed.

It is additionally possible that the first and second points are points at a first side of the vessel that have different distances to the object, where one of the points is assumed to have a higher speed than the other if it is closer to the object than the other and the determining of at least one vessel orientation compensation is the determining of a vessel orientation compensation that reduces the difference between the distances to the object of the two points.

Here it is additionally possible that the control command is provided for a point on a second side opposite of the point on the first side that is closer to the object than the other point on the first side.

Additionally or alternatively, it is possible that the object is considered to be a repelling element having a virtual potential that is the same as a virtual potential of the vessel and causing distance/radial-dependent force or speed changes from the object. This kind of virtual potential approach could also be implemented so that a virtual potential field between the object and the vessel is determined and, speed and orientation changes of the vessel are determined based on this field.

Another alternative is that the distance to the at least one point is determined based on a present position and orientation of a fixed point on the vessel to a fixed location in a world coordinate system. In this case fixed point(s) on the vessel may be compared to fixed point(s) on the object/in the world and where not only the distance and speed to the points are used to control the speed in that degree of freedom (for instance sideways) but that the angle and change in angle (angular rate) is used to determine a compensation in the other degree of freedom (for instance forward).

The providing of the at least one control command compensation for use in the operation of the vessel may additionally comprise adding the at least one control command compensation to a control command for the vessel control device, which control command has been determined based on user inputs made by the operator.

The vessel may have a port side, a starboard side, a bow and an a stern, where at least one distance and at least one speed measurement is enabled to be made at the bow, at least one distance and at least one speed measurement is enabled to be made at the bow, at least two distances and at least two speed measurements are enabled to be made at the port side and at least two distances and at least two speed measurements are enabled to be made at the starboard side.

The at least one control command adjustment may be fed back to the operator via the user interface device.

According to another variation of the first aspect, the method further comprises receiving a user input, converting it to the control command and supplying the control command to the vessel control device for controlling the vessel.

According to a corresponding variation of the second aspect, the command adjustment device is further operative to receive an user input, convert it to the control command and supply the control command to the vessel control device for controlling the vessel.

It should be emphasized that the term "comprises/comprising" when used in this specification is taken to specify the presence of stated features, steps or components, but does not preclude the presence or addition of one or more other features, steps, components or groups thereof.

### BRIEF DESCRIPTION OF THE DRAWINGS

The invention will now be described in more detail in relation to the enclosed drawings, in which:
fig. 1 schematically shows a first way of realizing a command adjusting device,
fig. 2 shows a computer program product in the form of a CD ROM with computer program code used to implement the command adjusting device,
fig. 3 schematically shows a vessel comprising the command adjusting device as well as a user interface device, a sensor unit and a vessel control device,
fig. 4 schematically shows a vessel control system comprising an input conversion module, the user interface device, the command adjustment device, the sensor unit and the vessel control device,
fig. 5 schematically shows a number of method steps in a first embodiment of a method for compensating imprecise user input in the maneuvering of a vessel,
fig. 6 schematically shows a vessel being operated in relation to an object and comprising four propulsion machines, and
fig. 7 shows a flow chart of a number of method steps in a second embodiment of the method for compensating imprecise user input in the maneuvering of the vessel.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

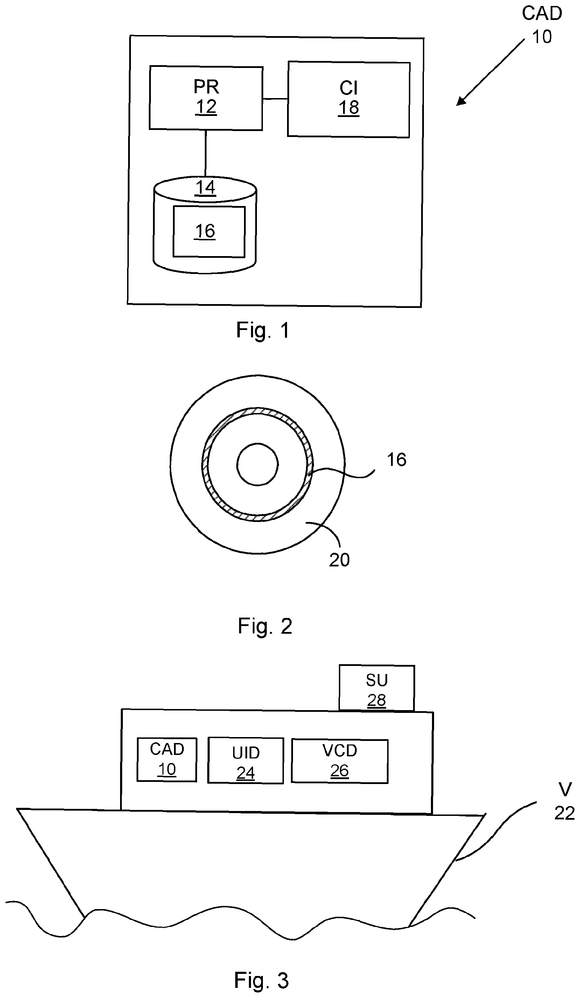

Fig. 1 schematically shows one realization of a command adjustment device CAD 10. In the present example, the command adjustment device 10 comprises a processor PR 12 and a memory or data storage 14 with computer program instructions or computer program code 16 that, when executed by the processor 12, implements a command adjustment module and a perception module.

The command adjustment device 10 may thus comprise a processor 12 with associated program memory 14 including computer program code 16 for implementing the command adjustment module and the perception module.

A computer program may also be provided via a computer program product, for instance in the form of a computer readable storage medium, such as a non-transitory storage medium or data carrier, like a CD ROM or a memory stick, carrying such a computer program with the computer program code, which will implement the above-mentioned modules when being loaded into a processor. One such computer program product in the form of a CD ROM 20 with the above-mentioned computer program code 16 is schematically shown in fig. 2.

The command adjustment device 10 may with advantage be provided in a vessel.

Fig. 3 schematically shows a vessel V 22 comprising the command adjustment device CAD 10. The vessel 22 also comprises a user interface device UID 24, such as a joystick, lever or a steering wheel, as well as a vessel control device VCD 26, which is a device for controlling the vessel 22, for instance for controlling how it is to move in a body of water. The vessel 22 furthermore comprises a sensor unit SU 28, which sensor unit 28 measures relevant quantities, such as vessel velocity, and possibly also actual states of control signals. It may also comprise functionality for collecting sensor data such as radar Echoes, Lidar images, ultrasonic echoes and/or camera images. The sensor unit may additionally comprise underwater sensors such as sonar sensors.

Both the vessel control device 26 and the user interface device 24 may be used in the control of the vessel 22. The vessel 22 is additionally provided with a group of propulsion machines, such as a group of thrusters.

There is a lot of development around vessel automation and autonomy ongoing globally in the marine industry.

Systems and solutions have been proposed for collision avoidance in automatic operation, automatic docking, etc. Most of the solutions presented are either fully automatic until human takes over or fully manual.

However, it is expected that most vessels will have low level of maneuvering automation in the foreseeable future. There are situational awareness systems as well as Electronic Chart Display Systems (ECDIS) which the operator can use to support in understanding how to approach a quay and what is the overall situation. However, there are no systems which could automatically use the information of the situation to complement the manual commands in a way that would take the load off from the operator to at the same time try to understand the situation and perform complex control commands.

In some use cases, it might be much smaller step to maintain the human in command of the vessel but enable to get benefit from autonomous technology by complementing the human manual control by automation which supports ensuring that the speed in maneuvering or at open sea are safe considering the distance to obstacles. This would allow the crew to focus on the intention of the maneuvers while the system makes small adjustments. There are numerous examples where this can be useful. For example, when docking a vessel and approaching a quay sideways, the crew must monitor the distances and alignment to the quay while controlling the vessel manually by levers or joystick. Whether or not the operator is able to maintain a safe speed and rate of turn (ROT) during approach of the quay is fully subject to the experience and focus of the crew. Moreover, if something unexpected appears before the quay the operator must manually perform complex control commands to either stop or adjust the vessel motion to avoid collision with the unexpected object or quay structure. Moreover, in adverse environmental conditions, for example, strong wind or tidal currents, it may be difficult for the operator to manage the speed of the vessel and confidently to control the approach.

When docking a larger vessel, such as a cruise vessel, the operator typically controls the vessel from the vessel bridge wing at the side of the docking. The bridge of the vessel is typically closer to the bow. The bridge wing may be more than 30 m high from the water surface and the stern of the vessel up to 300 m from the bridge wing. Especially in adverse weather conditions, it is extremely difficult for a human to assess whether the vessel is fully aligned with the quay and whether or not the bow and stern is approaching the quay with equal speed. In case the vessel hits the quay with misalignment or with too high speed, it can cause severe damage to the vessel structure, to the quay, but can also cause danger to the cargo, crew and passengers.

Many ship owners and operators also limit the use of Dynamic Positioning (DP) systems in approach and maneuvering at the port. They would rather have a system where the crew can be kept in control all the time. Therefore, a low-level manual joystick system where automation supports in adjusting the commands to maintain safe tolerances to the surroundings (with regard to distance and time) can be much easier to get accepted by the crew than fully automatic maneuvering and docking system. Especially in bigger vessels such as cruise vessels.

Aspects of the present disclosure are directed towards providing such automation support to manual control.

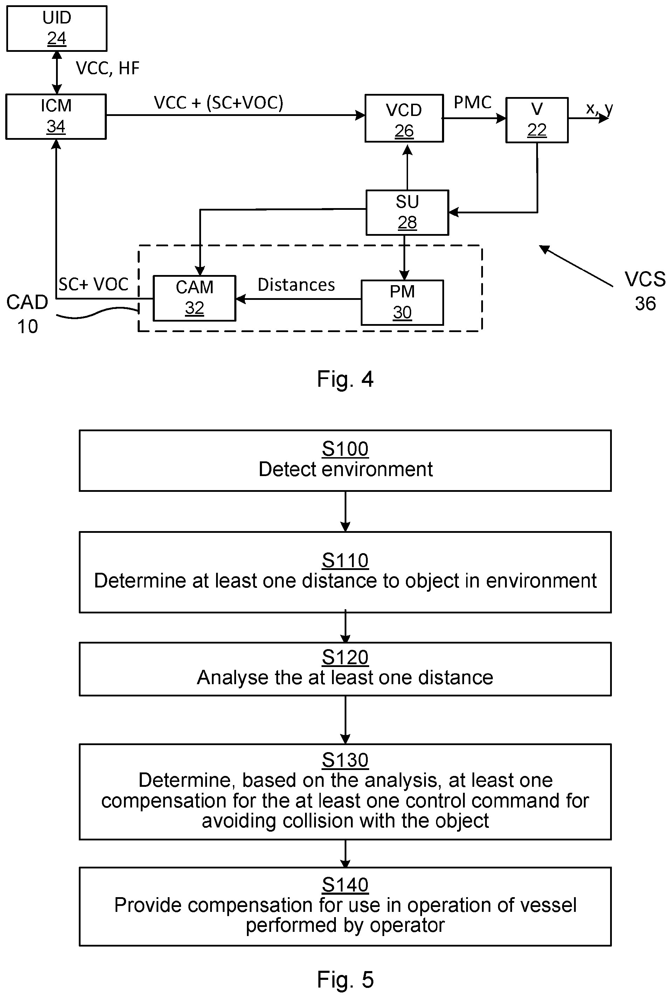

General operation achieving this will now be described with reference being made to fig. 4 and 5, where fig 4 shows a block schematic of a realization of a vessel control system VCS 36 comprising the command adjusting device 10 and which employs the user interface device 24 and sensor unit 28 and fig. 5 shows a flow chart of a first embodiment of compensating imprecise user input in the maneuvering of a vessel, which method steps are being performed by the command adjustment device 10.

As has been mentioned earlier, the command adjustment device comprises a command adjustment module CAM 32 and a perception module PM 30. There is also an input conversion module ICM 34 that may or may not be a part of the command adjustment device 10. In the example of fig. 4 it is external to the command adjustment device 10. The separation of these modules are conceptual and can vary in an actual implementation.

As can be seen in fig. 4, the command adjustment module CAM 32, the perception module PM 30, the input conversion module ICM 34, the vessel V 22, vessel control device VCD 26, sensor unit SU 28 and the user interface device UID 24 may be considered to be parts of the vessel control system VCS 36.

The vessel control device 26 controls the vessel motion, movement or forces depending on the specific embodiment. The outputs of this device are commands that eventually may be controlling the propulsion machines of the vessel 22.

The user interface device 24 receives input commands that are forwarded to the input conversion module ICM 34 that processes the user commands. The user interface device 24 may also have a capability of providing haptic feedback for the operator.

The perception module 30 provides information of the vessel surroundings (distances, speeds, etc.) based on one or multiple sources which may be electronic charts or perception sensors including but not limited to camera, radar, lidar, etc. Alternatively, it might be a virtual object or other information entered by the operator to avoid certain areas.

The command adjustment module 32 utilizes inputs from the perception module 30 and provides adjustments for the operator commands based on the measured distances, speeds, etc. as well as user-defined parameters.

The sensor unit 28 performs and connects the required measurements including, but not limited to Global Navigation Satellite System (GNSS), compass, radar, camera, lidar, local position reference system, motion sensor, charts, etc. and feeds the measurement information to the other parts of the vessel control system, such as the vessel control device 26, perception module 30 and command adjustment module 32.

In operation, the user interface device 24 receives user input from a vessel operator in the form of a user actuation of the device, such as pressing buttons, the moving of a steering wheel, one or more control levers, a joystick or a track ball. This user input is converted into at least one vessel control command VCC by the input conversion module 34, which at least one vessel control command VCC is then supplied to the vessel control device VCD 26 for controlling the vessel. Thus, the at least one control command VCC originates from the vessel operator. Based on the one or more vessel control commands VCC, the vessel control device 26 then determines one or more propulsion machine commands PMC for controlling one or more propulsion machines of the vessel 22. The propulsion machine commands PMC are applied to the propulsion machines of the vessel, which leads to a movement of the vessel 22 in the body of water, where the movement can be considered to a movement in a plane, corresponding to sway and surge. The sensor unit 28 in turn obtains various sensor measurements and provides sensor measurements that may be needed for the control to the vessel control device 26, such as wind data, speed, position and heading. It may also obtain sensor data of the environment such as radar echoes, Lidar images and/or camera images and provides such sensor data of the environment to the perception module 30 of the command adjustment device 10. The sensor unit 28 may also provide other sensor data directly to the command adjustment module 10, such as wind measurements.

The sensor unit 28 thus obtains sensor measurements, for instance in the form of images, of the surroundings of the vessel and provides these sensor measurements of the environment to the perception module 30, while other sensor measurements may be provided to the command adjustment module 32 and/or the vessel control device 26.

The perception module 30 analyses the received sensor data in order to detect the environment of the vessel 22, i.e. the area surrounding the vessel 22, S100. This detection may additionally involve detecting if there are any objects above, in and/or below the water that surrounds the vessel 22. Objects above water can be cranes, bridges, platforms, terminal tunnels or gangways. Objects in water can be quays, islands, reefs, buoys, rafts and other vessels. Objects below water can be reefs and underwater rocks and part of the seabed if it is shallow. In addition or instead of receiving and analyzing sensor data, the perception module may receive and analyze digital chart/map data together with data about the position and optionally also of the orientation of the vessel in order to detect the environment of the vessel. An object may then be located through information from the map/chart. When such an object is detected in the environment, the perception module 30 determines at least one distance from the vessel 22 to the object, where each distance is associated with a corresponding point on the (exterior of) the vessel 22. Such a distance may be directly obtained through analyzing the sensor data, such as analyzing a Lidar image. When a map is used the distances from objects in the map are determined based on the own position and perhaps also based on the own orientation of the vessel. Thus, the at least one distance is at least one distance of the vessel 22 to the object in the environment of the vessel. As can be seen above, the at least one distance is also at least one distance that is obtained as the vessel is operated using the at last one vessel control command VCC that originates from the operator. The determining of at least one distance may additionally comprise determining a first distance to the object at a first point on the vessel and determining a second distance to the object at a second point on the vessel. If speeds are determined, the determining of at least one speed may in this case comprises determining the speed towards the object at each of the points.

If there is an object on the starboard side of the vessel, then it is possible that the at least one distance comprises a first and a second distance at two corresponding points on the starboard side, if there is an object on the port side, then it is possible that the at least one distance comprises two distances at corresponding points on the port side, if there is an object in front of the vessel, then there may be at least one or two distances from one or two positions on the bow possibly together with a distance from a point on the starboard side and/or together with a distance from a point on the port side, while if there is an object behind the vessel, then at least one or two distances may be determined from one or two positions on the stern possibly together with a distance from a point on the starboard side and/or together with a distance from a point on the port side. It might also be possible that the points of interest are changing during the maneuvering of the vessel.

Optionally the perception module 30 may also determine at least one speed of the vessel 22 towards the object as the vessel is operated using the at least one control command VCC, where each such speed is determined at a point where also a distance is being determined. Thus, at each point where a distance is determined, also a speed may be determined. A speed may be determined through the sensor data. Alternatively, it may be determined as a time derivative of the distance.

As can be seen above, the at least one speed is obtained as the vessel 22 is operated using the at last one control command that originates from the operator.

Another alternative is that the distance to the at least one point is determined based on a present position and orientation of a fixed point on the vessel to a fixed location in a world coordinate system. In this case fixed point(s) on the vessel may be compared to fixed point(s) on the object/in the world and where not only the distance and speed to the points are used to control the speed in that degree of freedom (for instance sideways) but that the angle and change in angle (angular rate) is used to determine a compensation in the other degree of freedom (for instance forward). This might be interesting for docking at a fixed location along a quay.

The command adjustment module 32 then analyses the at least one distance and optionally also the at least one speed, S120, and determines at least one compensation for the at least one vessel control command VCC based on the analysis of the at least one distance and optionally of the at least one speed, S130, where the at least one compensation is a compensation for avoiding collision with the object.

If there is deemed to be a risk for collision, the at least one control command compensation may comprise a command compensation for reducing the speed in the direction towards the object.

The reduction of the speed may additionally be a reduction where the speed decreases with decreasing distance to the object, so that the closer that the vessel is to the object, the lower the speed is. Therefore, the analysing may comprise analysing a relationship between the at least one distance, the at least one speed and time.

The decreasing of the speed with decreasing distance may additionally be made while considering a minimum constant time of encounter to the object.

A control command causing a speed or force in a direction contributing to the moving of the vessel towards the object may be compensated by a control command compensation causing a speed or force in the opposite direction.

The control command compensation with opposite direction may additionally be applied so that the compensation increases gradually. If for instance a bow of the vessel approaches a quay too fast with a current command, the bow force/speed command may start decreasing, by adding a command with an opposite sign compared to the command of the operator command. This added command may then grow bigger the closer and the faster the bow approaches the quay. So, an additional command is introduced (either through the force feedback or directly adding to the commands), but the total command does not necessarily change sign immediately, provided that the operator command was nonzero to start with.

There may be deemed to be a risk for collision if the vessel speed is above a vessel speed threshold, which vessel speed threshold may be adaptive.

The adaptation may be based on user settings or by using the current capabilities of the vessel to slow down the motion of the vessel. These capabilities might depend on which propulsion devices that are active and/or how many generators that are currently running. Alternatively, the vessel speed threshold may be adapted to suit a comfort level of passengers of the vessel.

Additionally or instead it is possible that the command compensation comprise a vessel orientation compensation VOC that compensates an orientation of the vessel with regard to the object. It is thus a compensation that counters a rotation of the vessel or yaw. In this case it is possible that the command adjustment module 32 estimates a desired vessel orientation based on a vessel shape, an actual vessel orientation and a shape of the object.

It is additionally possible that the object is considered to be a repelling element having a virtual potential that is the same as a virtual potential of the vessel and causing distance/radial-dependent force or speed changes from the object. This kind of virtual potential approach could also be implemented so that a virtual potential field between the object and the vessel is determined and, speed and orientation changes of the vessel are determined based on this field. The object and vessel can then be seen as being magnets having the same poles.

If there are two speeds towards the object, then it is additionally possible that the determining of at least one vessel orientation compensation comprises determining a vessel orientation compensation that counters the part of the higher of the speeds that exceeds the other speed.

The command adjustment module 32 then provides the compensation to the input conversion module 34 for use in the operation of the vessel 22 that is performed by the operator, S140. The input conversion module 34 may use the compensation in order to provide feedback to the operator, such as haptic feedback HF via the user interface device 24. It may additionally or instead provide the compensation to the vessel control device 26 such that the compensation is applied in the control of the vessel 22. The providing of the at least one control command compensation for use in the operation of the vessel may thus comprise feeding it back to the operator via the user interface device and/or through adding it to a control command for the vessel control device, which control command has been determined based on user inputs made by the operator. Alternatively, the feedback can be provided by visual means, such as light indicators or by displaying information on a screen.

Through the use of haptic feedback HF, imprecise operator inputs that would lead to a collision with the object may meet some resistance and may thus be harder to make, while the compensation supplied to the vessel control device 26 may counter the parts of the vessel control commands that would lead to a collision with the object. Thereby, the safety increased and the imprecisions in operator input countered.

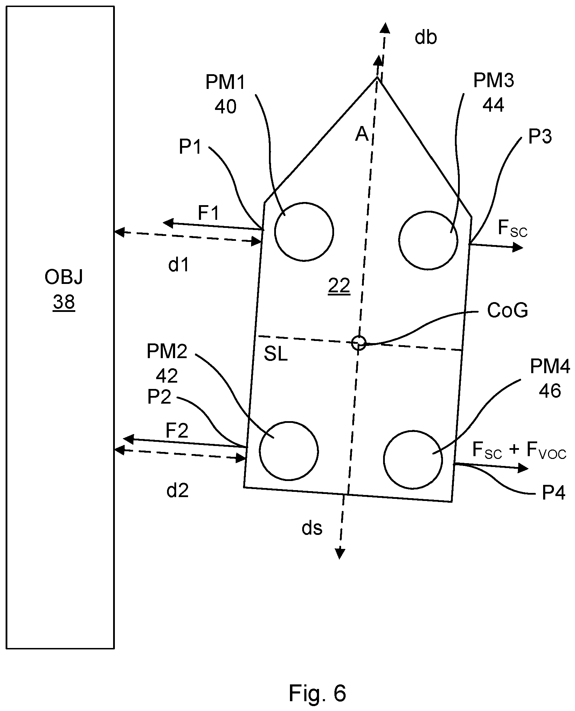

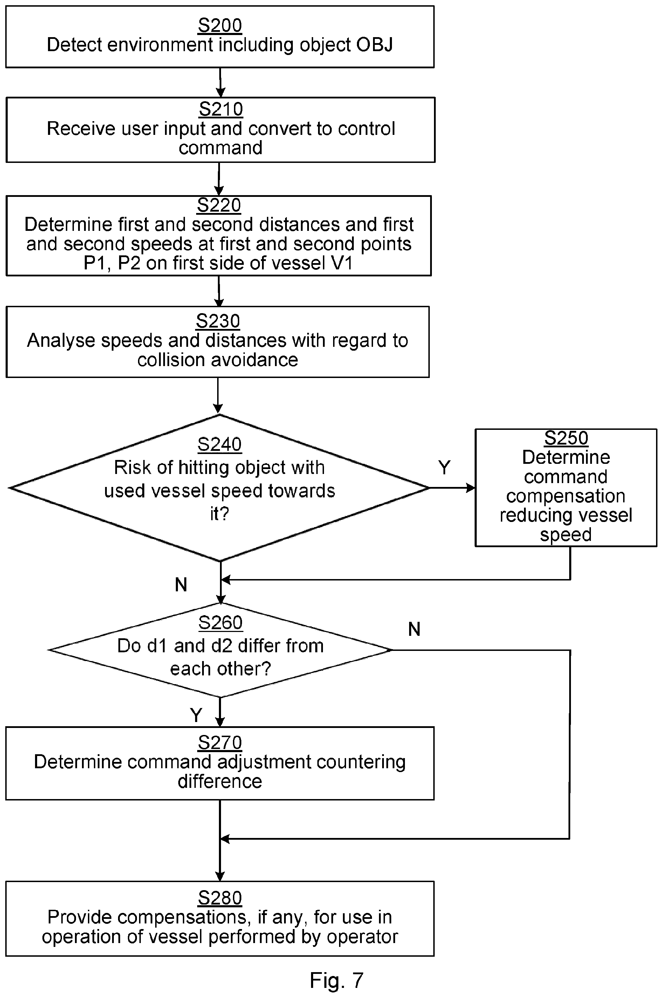

Now a second embodiment will be described with reference also being made to fig. 6 and 7, where fig. 6 shows a vessel with four propulsion machines that is being moved in relation to an object OBJ 38, with which collision is to be avoided, and fig. 7 shows a flow chart of a number of method steps in the second embodiment of the method of compensating imprecise user input in the maneuvering of the vessel.

In this example the input conversion module is a part of the command adjustment device 10.

In the example shown in fig. 6, there is a first and second propulsion machine PM1 40, PM2 42 at the starboard side of the vessel 22, where the first prolusion machine 40 is closer to the bow and the second propulsion machine 42 is closer to the stern. There is also third and fourth propulsion machine PM3 44, PM4 46 at the port side of the vessel 22, where the third propulsion machine 44 is closer to the bow and the fourth propulsion machine 46 is closer to the stern. The third propulsion machine 44 is provided opposite of the first propulsion machine 40 in relation to a longitudinal axis A through the vessel 22 and the fourth propulsion machine 46 is provided opposite of the second propulsion machine 42 in relation to the longitudinal axis A. There is also a symmetry line SL that passes through a center of gravity CoG of the vessel at right angles to the longitudinal axis A. The first and second propulsion machines 40, 42 are provided at the same distance to and on opposite sides of the symmetry line SL. The third and fourth propulsion machines 44, 46 are also provided at the same distance to and on opposite sides of the symmetry line SL.

In the example, the vessel is to land at an object OBJ 38 in the form of a quay so that the starboard side is moved to and placed along the quay. It is thus to be placed adjacent and in parallel with the quay. In order to do this there is at least one vessel control command VCC provided by the operator leading to the first propulsion machine 40 applying a first force F1 at right angles to the starboard side as well as to the longitudinal axis A and the second propulsion machine 42 applying a second force F2 at right angles to the starboard side well as to the longitudinal axis A. Due to imprecisions in the operator input, these forces F1, F2 may be too high, leading to the vessel crashing into the quay. Moreover, the second force F2 may be higher than the first force F1 or vice versa, which would lead to a rotation of the vessel around its center of gravity CoG and thereby the starboard side would not be properly aligned with the quay, which could also lead to a crash.

How such a crash may be avoided will now be described with reference also being made to fig. 7.

The method may start with the perception module 30 receiving sensor data from the sensors of the sensor unit 28, analyzing the sensor data and then determine the environment based on the analysis, S200. It thus detects the environment of the vessel using the sensor data, which detection in this case also involves detecting the object 38 in the environment. The input conversion module 34 may also receive user input via the user interface device 24 and convert it into at least one control command VCC, S210, which control command VCC is supplied to the vessel control device 26 for controlling the vessel 22. In the present example, there is a vessel control command VCC that causes the vessel control device 26 to control the first propulsion machine 40 to generate the first force F1 and the second propulsion machine 42 to generate the second force F2, which makes the vessel move towards the object 38.

The perception module 30 then determines at least one distance to the object in the environment of the vessel 22 as the vessel is operated using at least one control command VCC originating from the operator and where each distance is related to a corresponding point on the vessel 22. In this case, it also determines at least one speed of the vessel 22 towards the object 38 as the vessel 22 is operated using the at least one control command. More particularly, the perception module 30 determines a first distance d1 to the object 38 at a first point P1 on the vessel 22, a second distance d2 to the object 38 at a second point P2 on the vessel 22 and first and second speeds at the first and second points P1, P2, S220.

In the present example, the first side is the starboard side of the vessel 22 and the perception module determines a first distance d1 to the object 38 at the first point P1 on the starboard side, which first point P1 is aligned with the first propulsion machine 40, and a second distance d2 to the object at the second point P2 on the starboard side, which second point P2 is aligned with the second propulsion machine 42. The perception module 30 also determines a first and a second speed at the first and the second point P1, P2, which speeds may be determined as the derivatives of the first and second distances d1, d2. The first and second points P1, P2 may be placed on opposite sides of and at the same or equal distances to the symmetry line SL. It should be realized that the points need not be aligned with the propulsion machines. Neither do they need to be symmetrical in relation to the symmetry line SL. In fact, any points on the starboard side may be used. If there are objects in other directions, such as in front of the bow or behind the stern also distances in these directions could be determined. One such possible distance db in the direction away from the bow and one such possible distance ds in a direction away from the stern are also schematically indicated in fig. 6. Naturally also distances from the port could be determined if there were objects there.

Thus at least one distance and at least one speed measurement may be enabled to be made at the bow, at least one distance and at least one speed measurement may be enabled to be made at the bow, at least two distances and at least two speed measurements may be enabled to be made at the port side and at least two distances and at least two speed measurements may be enabled to be made at the starboard side.

The command adjustment module 32 then analyses the at least one distance and the at least one speed with regard to collision avoidance, S230. Thereafter, it determines, based on the analysis of the at least one distance and at least one speed, at least one compensation for the at least one control command.

The speed towards the object may be determined as the average of the first and second speeds. The at least one control command compensation may comprise a command compensation for reducing the speed of the vessel in the direction towards the object if there is deemed to be a risk for collision. There may be deemed to be a risk for collision if the vessel speed is above a vessel speed threshold.

The speed toward the object 38 may thus be compared with a speed threshold and a risk of hitting the object 38 may be determined to exist if the threshold is exceeded. The threshold may additionally be adaptive. It is possible that the threshold gets lower the closer to the object 38 the vessel 22 gets, where the distance to the object may be determined as the average of the first and second distances. In case the movement with the used speed is considered to provide a risk of hitting the object, S240, then a control command compensation is determined that reduces the vessel speed. Here, a control command that causes a speed or force in a direction contributing to the moving of the vessel towards the object is compensated by a control command compensation causing a speed or force in the opposite direction.

In case the speed is not considered to be a risk, S240, the command adjustment module 32 may continue and investigate the vessel orientation.

In the present example there is determined speed compensation SC causing a force F_{SC} from both the third and the fourth propulsion machines 44, 46 that is opposed to the first and second forces F1, F2. The third and fourth propulsion machines 44, 46 thus operate the vessel 22 with the same force in a direction that is opposite of the direction of the first and second forces F1, F2, so that a speed compensation SC that counteracts the vessel speed towards the object is obtained. The four propulsion units could alternatively work in different ways to achieve the same outcome, for instance by producing force in the same direction.

Also, a vessel orientation compensation may be investigated, which vessel orientation compensation investigation may be performed irrespective of the outcome of the vessel speed investigation. The vessel orientation compensation investigation may involve the command adjustment module 32 investigating if the vessel will collide with the object for an actual vessel orientation or not. This may involve estimating a desired vessel orientation based on a vessel shape, an actual vessel orientation and a shape of the object 38. In the example of a quay this may involve determining that the starboard side should be placed in parallel with the quay. It is additionally possible that the determining of at least one vessel orientation compensation comprises determining a vessel orientation compensation that counters the part of the higher of the speeds that exceeds the other speed.

This determination may be simplified. When the first and second points are points at the first side of the vessel that have different distances to the object, then the determining of at least one vessel orientation compensation may be the determining of a vessel orientation compensation that reduces the difference between the distances to the object of the two points. In the example of fig. 6, the first side is the starboard side with the points P1 and P2 and the first and second distance d1, d2. Thus, the need for a vessel orientation compensation may be determined through comparing the first and second distances d1, d2 with each other and determining that the vessel is deemed to collide with the object 38 if the first and second distances d1, d2 differ from each other, S260.

In case they differ from each other, there is a rotation around the center of gravity which has to be countered. The rotation speed may be determined based on the two distance and/or based on the first and second speeds. Thus, there is a determination of a command adjustment that counters the difference in distances and speeds, S270. The determining of at least one vessel orientation compensation may be the determining of a vessel orientation compensation that reduces the difference between the distances to the object of the two points.

In the present example, the second distance d2 is higher than the first distance d1 and therefore a command adjustment VOC that counteracts the rotation is determined, which command adjustment when applied by the vessel control device 26, causes the fourth propulsion machine 46 to apply a force F_{VOC} at the fourth point P₄ that is opposite of the second force F2 and has an amount or quantity that corresponds to the difference between the first and second forces F1, F2. Thus, the control command is provided for a point on a second side (in this case the port side), opposite of the point on the first side that is closer to the object than the other point on the first side.

If compensations have been determined, these are then supplied to the input conversion module 34, S280, which in turn provides compensations through haptic feedback to the operator via the joystick, trackball, one or more levers etc. and/or through providing the compensations to the vessel control device 26. In this way the command adjustment module 32 provides the at least one control command compensation for use in the operation of the vessel being performed by the operator. Thus the providing of the at least one control command compensation for use in the operation of the vessel comprises feeding it back to the operator via the user interface device and/or through adding it to a control command for the vessel control device, which control command has been determined based on user inputs made by the operator.

Thus, there is provided a solution which helps to control vessels manually with levers, joystick or other user interface devices for automatically ensuring that the vessel does not collide with any nearby structure or another vessel. Imprecise user inputs that are made in the maneuvering of the vessel are thus compensated.

The command adjustment device may utilize information from the crew, onboard sensors implementing a perception system or chart system to determine the distances to the surrounding obstacles and based on that complement/adjust/limit the human control commands to ensure that the vessel does not collide with the surrounding obstacles and approaches the objects nearby in a controlled smooth and safe manner.

The described teachings utilize measured, user provided or digital information of the surroundings to calculate safe speed in all vessel directions and adjusts the operator commands smoothly if needed to enable approaching the obstacles in a safe manner.

The user interface device may together with the input conversion module operate in force joystick mode, speed joystick mode or manual control mode. They may additionally provide haptic feedback.
1. In force joystick mode, automatic adjustment is made of surge and sway forces and yaw torque based on calculations from the command adjustment module to enable slowing down the speed w.r.t. surge, sway or yaw if vessel is approaching any object too fast.
2. In speed joystick mode, automatic adjustment is made of surge, sway and yaw velocities based on calculations from command adjustment module to enable slowing down the speed w.r.t. surge, sway or yaw if vessel is approaching any object too fast.
3. In manual control mode (using e.g. Azipod levers), adjustment of the allowed propeller pitch, speed and angles is made based on calculations from command adjustment module to enable slowing down the speed w.r.t surge, sway or yaw if vessel is approaching any object too fast.
4. Haptic feedback may be given via the user interface device in order to enable the user to manually adjust the surge, sway and yaw commands based on calculations from command adjustment module to enable slowing down the speed w.r.t. surge, sway or yaw if vessel is approaching any object too fast. In this mode the operator may decide to maintain the current command and neglect the "advice" from the vessel control system. The user might also choose to turn of the haptic feedback and rely on other information.

A sequence of operation of the command adjustment device may also be described in the following way:
1. Acquiring user input command to the vessel from the user interface device.
2. Determining whether adjustments are needed and calculation of the required adjustments to the input based on the output from the perception module.
3. Adjustment of the vessel control command either automatically or by providing haptic, or visual, feedback to the operator. Depending on the embodiment, the adjustment can be done either in the input conversion module or the vessel control device.
4. Executing the control command (possibly with adjustments) by the vessel control device which commands either directly controls the propulsion machines or provides control commands via another system (such as thruster control system, remote control system, etc.) which ultimately affect the vessel motion in a desired way and therefore prevent collisions enabling smooth approach to the obstacles such as quay.

While some vessel segments (such as short distance shipping) are predicted to move towards higher level of automation in maneuvering and navigation in the near future, some other segments, such as cruise ships, offshore ships, etc. will most likely only take smaller steps to automation by employing for example advanced manual control solutions. Moreover, the feature closes the gap between situational awareness advisory and control while not taking the command away from the crew. It just automatically supports the operator in safe operation while enabling the operator to remain fully in control. It is also good to remember that even in vessels with automatic/autonomous capabilities, the operator has to take over the command sometimes. In situations when the level of automation is reverted to lower level, it may be beneficial to still maintain some level of automation (by having the proposed feature as a fallback mode) instead of going directly to fully manual.

The maneuvering discussed herein has mainly been described in relation to docking a vessel at a quay. In such docking low speeds are used. However, it should be realized that the invention is not limited to docking or low speeds.

For instance, the maneuvering described herein could just as well be used at transit speeds, when in manual levers or rudder/miniwheel and rpm control, in order to avoid collision in manual operation at high speed, by analyzing the distances/speeds at which other objects are approached, and then adjusting the speed and rate of turn (ROT) to mitigate the risk for collision.

The invention may be varied in a number of ways. Therefore, while the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A method for compensating imprecise user input in the maneuvering of a vessel (22), the method being performed by a command adjustment device (10) and comprising:
detecting (S100; S200) the environment of the vessel (22),
determining (S110, S220) at least one distance (d1, d2) of the vessel to an object (38) in the environment of the vessel (22) as the vessel is operated using at least one control command (VCC) originating from an operator of the vessel, where each distance is related to a corresponding point (P1, P2) on the vessel (22),
analysing (S120, S230) the at least one distance,
determining (S130; S250, S270), based on the analysis of the at least one distance, at least one compensation for the at least one control command, and
providing (S140; S280) the at least one control command compensation for use in the operation of the vessel (22) being performed by the operator.

2. The method as claimed in claim 1, further comprising determining (S220) at least one speed of the vessel towards the object (38) as the vessel is operated using the at least one control command (VCC) and analysing (S230) the at least one speed, wherein the determining (S250, S270) of the at least one control command compensation is made based also on the analysis of the at least one speed.

3. The method as claimed in claim 1 or 2, wherein the at least one control command compensation comprises a command compensation for reducing (S250) the speed of the vessel (22) in the direction towards the object if there is deemed (S240) to be a risk for collision.

4. The method according to any previous claim, wherein the determining of at least one distance comprises determining (S220) a first distance (d1, d2) to the object (38) at a first point (P1) on the vessel (22) and determining a second distance (d2) to the object (38) at a second point (P2) on the vessel.

5. The method according to claim 4 when depending on claim 2, wherein the determining (S220) of at least one speed comprises determining the speed towards the object (38) at each of the points (P1, P2).

6. The method according to claim 4 or 5, wherein the at least one control command compensation comprises at least one vessel orientation compensation (VOC).

7. The method according to claim 6 when depending on claim 5, wherein the determining of at least one vessel orientation compensation (VOC) comprises determining a vessel orientation compensation (VOC) that counters the part of the higher of the speeds that exceeds the other speed.

8. The method according to claim 6 or 7, wherein the first and second points (P1, P2) are points at a first side of the vessel that have different distances (d1, d2) to the object (38), where one of the points (P2) is assumed to have a higher speed than the other (P1) if it is closer to the object (38) than the other and the determining of at least one vessel orientation compensation (VOC) is the determining of a vessel orientation compensation that reduces the difference between the distances (d1, d2) to the object (38) of the two points (P1, P2).

9. The method as claimed in any previous claim wherein the providing (S140; S280) of the at least one control command compensation for use in the operation of the vessel comprises adding the at least one control command compensation to a control command (VCC) for a vessel control device (26), which control command (VCC) has been determined based on user inputs made by the operator.

10. The method according to any previous claim, wherein the at least one control command adjustment is fed back to the operator via a user interface device (24).

11. The method as claimed in any previous claim, further comprising receiving a user input, converting it to the control command (VCC) and supplying the control command to the vessel control device (26) for controlling the vessel.

12. A command adjustment device (10) for compensating imprecise user input in the maneuvering of a vessel (22), the command adjustment device (10) comprising a processor (12) operative to:
detect the environment of the vessel (22) ,
determine at least one distance (d1, d2) of the vessel to an object (38) in the environment of the vessel (22) as the vessel is operated using at least one control command (VCC) originating from an operator of the vessel, where each distance is related to a corresponding point (P1, P2) on the vessel (22),
analyse the at least one distance,
determine, based on the analysis of the at least one distance, at least one compensation for the at least one control command, and
provide the at least one control command compensation for use in the operation of the vessel being performed by the operator.

13. A vessel control system (36) comprising a user interface device (24), a sensor unit (28), a vessel control device (26) and a command adjusting device according to claim 12.

14. A vessel (22) comprising the vessel control system according to claim 13.

15. A computer program for compensating imprecise user input in the maneuvering of a vessel (22), the computer program comprising computer program code (16) which when run by a processor (12) of a command adjusting device (10) causes the processor (12) to:
detect the environment of the vessel (22),
determine at least one distance (d1, d2) of the vessel to an object (38) in the environment of the vessel (22) as the vessel is operated using at least one control command (VCC) originating from an operator of the vessel, where each distance is related to a corresponding point (P1, P2) on the vessel (22),
analyse the at least one distance,
determine, based on the analysis of the at least one distance, at least one compensation for the at least one control command, and
provide the at least one control command compensation for use in the operation of the vessel being performed by the operator.

16. A computer program product for compensating imprecise user input in the maneuvering of a vessel (22), the computer program product comprising a data carrier (20) with said computer program code (16) according to claim 15.
